# EUROPÄISCHE PATENTSCHRIFT

(11) **EP 1 539 599 B1**
(45) Veröffentlichungstag und Bekanntmachung des Hinweises auf die Patenterteilung: **29.07.2009**
(21) Anmeldenummer: 03795173.8
(22) Anmeldetag: 19.08.2003
(51) Int. Cl.: B65D 23/02, B29C 45/00

(54) **BEHÄLTER ZUR VERPACKUNG VON PRODUKTEN, VORRICHTUNG ZUR VERARBEITUNG VON KUNSTSTOFF SOWIE VERFAHREN ZUR BEHÄLTERHERSTELLUNG**
CONTAINER FOR THE PACKAGING OF PRODUCTS, DEVICE FOR PROCESSING PLASTICS AND METHOD FOR PRODUCTION OF A CONTAINER
RECIPIENT POUR CONDITIONNEMENT DE PRODUITS, DISPOSITIF POUR TRAITER DE LA MATIERE PLASTIQUE ET PROCEDE POUR PRODUIRE DES RECIPIENTS

(30) Priorität: 11.09.2002 DE 10242086
(43) Veröffentlichungstag der Anmeldung: 15.06.2005
(73) Patentinhaber: KHS Corpoplast GmbH & Co. KG, 20539 Hamburg (DE)
(72) Erfinder: ANDRICH, Peter, Glen Gardner, NJ 08826 (US); HARTWIG, Klaus, 54000 Nancy (DE)
(74) Vertreter: Klickow, Hans-Henning
(86) Internationale Anmeldenummer: PCT/IB2003/004003
(87) Internationale Veröffentlichungsnummer: WO 2004/024577

(56) Entgegenhaltungen:
- EP-A- 0 773 167
- WO-A-95/22413
- WO-A-96/33098
- GB-A- 1 560 952
- US-A- 5 531 060

## Beschreibung

Die Erfindung betrifft einen Behälter zur Verpackung von Getränken, der eine Wandung aus einem thermoplastischen Kunststoff besitzt, wobei der Kunststoff mindestens bereichsweise mindestens einen an einen Innenraum des Behälters abgebbaren Bestandteil enthält, wobei der abgebbare Bestandteil mit einem Anteil im thermoplastischen Kunststoff enthalten ist, der oberhalb eines Anteils liegt, der in einem für die Verpackung der Getränke vorgesehenen Standard-Kunststoff enthalten ist und wobei das Getränk innerhalb des Behälters angeordnet ist.

Die Erfindung betrifft darüber hinaus eine Vorrichtung zur Herstellung von Vorformlingen aus einem thermoplastischen Material, die eine Spritzgußeinrichtung mit Kavitäten für die Vorformlinge aufweist.

Die Erfindung betrifft ebenfalls ein Verfahren zur Herstellung von Behältern aus einem thermoplastischen Kunststoff, bei dem der Kunststoff in einem Reaktor hergestellt und anschließend von einer Spritzgußeinrichtung zu vorformlingen geformt wird sowie bei dem die Vorformlinge blastechnisch in die Behälter umgeformt und anschließend mindestens bereichsweise im Bereich ihrer inneren Oberfläche mit einer durch Plasmaeinwirkung hergestellten Barriereschicht versehen werden.

Derartige Behälter können beispielsweise aus PET ausgebildet sein und zur Verpackung von Getränken oder anderen Flüssigkeiten verwendet werden. Insbesondere bei der Verpackung von Getränken oder anderen Nahrungsmitteln existieren strenge Anforderungen an die Reinheit der verwendeten Materialien. Diese Anforderungen stehen einer ebenfalls aus Gründen des Umweltschutzes erwünschten Verwendung von Recyclingmaterialien entgegen, da derartige Materialien häufig Verunreinigungen enthalten.

Als Kompromißlösung zwischen diesen unterschiedlichen Anforderungen ist es bereits bekannt, zunächst spritzgußtechnisch mehrlagige Vorformlinge herzustellen und anschließend blastechnisch in Behälter umzuformen. Die Mehrlagigkeit ist dabei derart gestaltet, daß mindestens eine innere Lage aus einem Recyclingmaterial von äußeren Lagen aus frischem Material abgedeckt ist, so daß das zu verpackende Produkt nicht in Kontakt mit dem Recyclingmaterial kommt. Eine derartige Materialkombination ist beispielsweise in der GB-C-1 560 952 beschrieben. Die Herstellung entsprechender Vorformlinge erfordert jedoch die Verwendung teurer spezieller Spritzgußmaschinen, die zu einem hohen Produktpreis führen. Ein weiteres Problem bei der Materialauswahl für die Behälter besteht darin, daß die verwendeten Kunststoffe in der Regel nicht gasdicht sind. Dies ermöglicht insbesondere ein Eindringen von Sauerstoff in den Behälter hinein sowie einen Austritt von Kohlendioxid bei kohlendioxidhaltigen Flüssigkeiten, beispielsweise Limonaden, Mineralwasser oder Bier. Zur Verbesserung von Barriereeigenschaften der Behälter werden ebenfalls verbreitet mehrlagige Behälter eingesetzt, bei denen eine spezielle Sperrschicht aus einem vom Hauptmaterial abweichenden Barrierematerial eingebracht ist. Auch hier ist die Herstellung der entsprechenden Vorformlinge teuer, darüber hinaus ergeben sich aufgrund der Kombination unterschiedlicher Materialien Probleme beim Recycling, da sich die unterschiedlichen Materialien häufig nicht in einfacher Weise trennen lassen.

Ein weiteres Verfahren zur Verbesserung der Barriereeigenschaften besteht in der Plasmabeschichtung des Behältermaterials, wobei die Beschichtung sowohl innen als auch außen erfolgen kann. Bewährt hat sich insbesondere eine Beschichtung mit Siliziumoxiden.

In der PCT-WO 95/22413 wird eine Plasmakammer zur Innenbeschichtung von Flaschen aus PET beschrieben. Die zu beschichtenden Flaschen werden durch einen beweglichen Boden in eine Plasmakammer hineingehoben und im Bereich einer Flaschenmündung mit einem Adapter in verbindung gebracht. Durch den Adapter hindurch kann eine Evakuierung des Flascheninnenraumes erfolgen. Darüber hinaus wird durch den Adapter hindurch eine hohle Lanze in den Innenraum der Flaschen eingeführt, um Prozeßgas zuzuführen. Eine Zündung des Plasmas erfolgt unter Verwendung einer Mikrowelle.

Aus dieser Veröffentlichung ist es auch bereits bekannt, eine Mehrzahl von Plasmakammern auf einem rotierenden Rad anzuordnen. Hierdurch wird eine hohe Produktionsrate von Flaschen je Zeiteinheit unterstützt.

In der EP-OS 10 10 773 wird eine Zuführeinrichtung erläutert, um einen Flascheninnenraum zu evakuieren und mit Prozeßgas zu versorgen. In der PCT-WO 01/31680 wird eine Plasmakammer beschrieben, in die die Flaschen von einem beweglichen Deckel eingeführt werden, der zuvor mit einem Mündungsbereich der Flaschen verbunden wurde.

Die PCT-WO 00/58631 zeigt ebenfalls bereits die Anordnung von Plasmastationen auf einem rotierenden Rad und beschreibt für eine derartige Anordnung eine gruppenweise Zuordnung von Unterdruckpumpen und Plasmastationen, um eine günstige Evakuierung der Kammern sowie der Innenräume der Flaschen zu unterstützen. Darüber hinaus wird die Beschichtung von mehreren Behältern in einer gemeinsamen Plasmastation bzw. einer gemeinsamen Kavität erwähnt.

Eine weitere Anordnung zur Durchführung einer Innenbeschichtung von Flaschen wird in der PCT-WO 99/17334 beschrieben. Es wird hier insbesondere eine Anordnung eines Mikrowellengenerators oberhalb der Plasmakammer sowie eine Vakuum- und Betriebsmittelzuleitung durch einen Boden der Plasmakammer hindurch beschrieben.

In der US 5,531,060 wird die Anordnung einer Plasmabeschichtung auf einem Kunststoffmaterial beschrieben, um eine Barriereschicht aus SIOX bereitzustellen. Für die Verpackung von Lebensmitteln werden hierdurch eine größere Anzahl von Kunststoffmaterialien erschlossen, die selbst keine ausreichenden Barriereeigenschaften aufweisen.

Aus der WO 96/33098 A ist es ebenfalls bekannt, Behälter zur Aufbewahrung von Nahrungsmitteln mit einer Barriereschicht aus SIOX oder anderen geeigneten Materialien derart zu versehen, daß insbesondere vorteilhafte Gasbarriereeigenschaften realisiert werden.

Bei der überwiegenden Anzahl der bekannten Plasmabeschichtungsverfahren werden zur Verbesserung von Barriereeigenschaften des thermoplastischen Kunststoffmaterials durch das Plasma erzeugte Behälterschichten aus Siliziumoxiden mit der allgemeinen chemischen Formel SiOₓ verwendet. Zusätzlich können in den hierdurch erzeugten Barriereschichten auch Anteile von Kohlenstoff, Wasserstoff und Stickstoff enthalten sein. Derartige Barriereschichten verhindern ein Eindringen von Sauerstoff in die verpackten Flüssigkeiten sowie ein Austreten von Kohlendioxid bei CO₂-haltigen Flüssigkeiten.

Die Plasmabeschichtung erfolgt häufig bei Behältern, die blastechnisch aus zuvor geeignet temperierten vorformlingen hergestellt wurden. Typischerweise bestehen derartige Vorformlinge aus einem thermoplastischen Material, beispielsweise aus PET (Polyethylenterephthalat). Nach einer geeigneten thermischen Konditionierung werden die Vorformlinge durch Blasdruckeinwirkung zu Behältern umgeformt, die beispielsweise als Flaschen zur Verpackung von Flüssigkeiten verwendet werden. Gemäß der DE-OS 100 33 412 werden Blasstationen auf einem rotierenden Blasrad angeordnet. Das Blasrad rotiert kontinuierlich und die auf dem Blasrad mitlaufend angeordneten Blasstationen nehmen die zu verformenden Vorformlinge auf und geben die fertig produzierten Behälter ab. Es sind darüber hinaus auch bereits taktweise bewegte Blasräder bekannt.

Bislang konnten noch keine Behälter hergestellt sowie Vorrichtungen zur Herstellung von Behältern und Vorformlingen konstruiert werden, um eine optimale Kombination der einander teilweise widersprechenden Anforderungen an eine wirtschaftliche Herstellung der Behälter, eine hohe Umweltfreundlichkeit sowie einem hohen Schutz der verpackten Produkte sowohl gegenüber einem Eindringen unerwünschter Stoffe als auch gegenüber einem Austritt von Produktbestandteilen durchzuführen.

Aufgabe der vorliegenden Erfindung ist es daher, einen Behälter der einleitend genannten Art derart bereitzustellen, daß gleichzeitig ökonomische, ökologische und qualitative Anforderungen erfüllt werden.

Diese Aufgabe wird erfindungsgemäß dadurch gelöst, daß die Wandung aus einem einlagigen Material ausgebildet ist und daß die Wandung im Bereich ihrer dem Innenraum zugewandten Oberfläche mindestens bereichsweise derart mit einer unter Anwendung eines Plasmaverfahrens aufgebrachten Oberflächenbeschichtung versehen ist, daß eine Abgaberate des Bestandteiles aus dem thermoplastischen Kunststoff heraus und durch die Oberflächenbeschichtung hindurch in Richtung auf den Innenraum höchsten gleich einer Abgaberate bei Verwendung eines thermoplastischen Kunststoffes mit einem Anteil des abgebbaren Bestandteiles im Bereich der Abgaberate eines unbeschichteten Standardmaterials sowie ohne Verwendung einer Innenbeschichtung realisiert ist.

Weitere Aufgabe der vorliegenden Erfindung ist es, eine Vorrichtung der einleitend genannten Art derart zu konstruieren, daß eine wirtschaftliche Produktion unterstützt wird.

Diese Aufgabe wird erfindungsgemäß dadurch gelöst, daß die Spritzgußeinrichtung mit einem Reaktor zur Herstellung des thermoplastischen Materials gekoppelt ist und daß die Spritzgußeinrichtung über einen Transportweg für die vorformlinge mit einer Blasdruckeinrichtung zur Herstellung von Behältern gekoppelt ist und daß die Blaseinrichtung von einer Übergabe mit einem Plasmamodul zur Erzeugung einer Barriereschicht auf dem Behälter gekoppelt ist.

Eine weitere Aufgabe der vorliegenden Erfindung besteht darin, ein verfahren der einleitend genannten Art derart durchzuführen, daß eine ökonomische, ökologische sowie qualitativ hochwertige Produktion von Behältern unterstützt wird.

Diese Aufgabe wird erfindungsgemäß dadurch gelöst, daß der Reaktor unmittelbar an die Spritzgußeinrichtung angeschlossen wird und daß der vom Reaktor hergestellte Kunststoff als Schmelze vom Reaktor zur Spritzgußeinrichtung geleitet wird.

Der erfindungsgemäße Behälter ermöglicht es, ein vergleichsweise preiswertes Material zu verwenden, und dennoch eine unzulässige Abgabe von unerwünschten Stoffen aus dem Behältermaterial heraus an ein innerhalb des Behälters abgepacktes Produkt zu vermeiden bzw. zumindest erheblich herabzusetzen. Der erfindungsgemäße Behälter ermöglicht insbesondere die Verwendung von Recyclingmaterial, ohne daß eine aufwendige Herstellung von mehrlagigen Vorformlingen erforderlich ist. Darüber hinaus ist es möglich, den für die Herstellung des Behälters verwendeten thermoplastischen Kunststoff nach modifizierten Verfahren oder unter Verwendung anderer als der derzeit verwendeten Katalysatoren herzustellen, da die Entstehung unerwünschter Nebenprodukte bzw. Restgehalte an Katalysatorsubstanzen nur noch eine nebengeordnete Bedeutung besitzen.

Die erfindungsgemäße Vorrichtung sowie das erfindungsgemäße Verfahren ermöglichen es, kosten- und energieintensive Zwischenschritte bei der Behälterproduktion zu vermeiden. Durch die direkte Kopplung des Reaktors und der Spritzgußeinrichtung werden ein Abkühlvorgang für das im Reaktor hergestellte Material, eine Zerkleinerung des Materials zu Granulat sowie eine anschließende erneute Erhitzung und Plastifizierung des Granulates vermieden.

Eine umweltfreundliche Behälterproduktion wird dadurch unterstützt, daß der thermoplastische Kunststoff mindestens zum Teil aus Recyclingmaterial ausgebildet ist.

Zur Ermöglichung einer preiswerten Behälterherstellung wird vorgeschlagen, daß der Kunststoff einen Gehalt an Acetaldehyd von mindestens 10 ppm aufweist. Ebenfalls ist es möglich, daß der Gehalt an Acetaldehyd mindestens 50 ppm beträgt bzw. typischerweise innerhalb eines Intervalles von 60 ppm bis 100 ppm liegt.

Eine preiswerte Behälterherstellung wird ebenfalls dadurch unterstützt, daß der Kunststoff Anteile eines Katalysators enthält.

Eine qualitativ hochwertige Behälterproduktion in großen Stückzahlen wird dadurch unterstütz, daß die Oberflächenbeschichtung als eine Plasmabeschichtung aufgebracht ist.

Bei der Verpackung von Lebensmitteln oder Getränken erweist es sich als besonders vorteilhaft, daß die Oberflächenbeschichtung als mindestens eine Schicht aus einem Siliziumoxid der allgemeinen Formel SiOx aufgebracht ist.

Eine typische Anwendung wird dadurch definiert, daß eine Formgebung entsprechend einer Flasche realisiert ist.

Eine vorteilhafte Materialauswahl besteht darin, daß der Kunststoff mindestens zum Teil als PET ausgebildet ist.

Zu einer Unterstützung optimaler Produkteigenschaften auch bei einem Einwirken von Belastungen wird vorgeschlagen, daß die Oberflächenbeschichtung unter Verwendung eines Haftvermittlers auf die Oberfläche aufgebracht ist.

Zur preiswerten Behälterherstellung trägt es ebenfalls bei, daß die wandung aus einem einlagigen Material ausgebildet ist.

Zur Anpassung einer kontinuierlichen Materialproduktion an einen diskontinuierlichen Materialverbrauch wird vorgeschlagen, daß zwischen dem Reaktor und der Spritzgußeinrichtung mindestens ein Zwischenspeicher für geschmolzenes thermoplastisches Material angeordnet ist.

Eine einfache mechanische Steuerbarkeit wird dadurch bereitgestellt, daß eine Befüllung und Entleerung des Zwischenspeichers gesteuert durch eine Hubbewegung eines Kolbens erfolgt.

Ein umfangreiches Anwendungsgebiet wird dadurch erschlossen, daß der Reaktor als eine Einrichtung zur Herstellung von PET ausgebildet ist.

Zur weiteren Verbesserung der Materialeigenschaften gegenüber einer Gaspermeation bzw. zur Unterstützung einer Bindung von flüchtigen Materialbestandteilen innerhalb des Materials wird vorgeschlagen, daß der Reaktor eine Mischeinrichtung zur Zuführung eines Scavengers aufweist.

Zur Anpassung an unterschiedliche Produktionskapazitäten des Reaktors sowie angeschlossener Spritzgußeinrichtungen wird vorgeschlagen, daß mindestens zwei Spritzgußeinrichtungen an den Reaktor angeschlossen sind.

Eine Produktionsflexibilität kann dadurch erhöht werden, daß relativ zueinander unterschiedliche Spritzgußeinrichtungen an den Reaktor angeschlossen sind.

Eine weitere Vergrößerung der Anwendungsmöglichkeiten besteht darin, daß an eine Kopplung zwischen dem Reaktor und der Spritzgußeinrichtung eine Mischeinrichtung zur Beimengung von plastifiziertem Recyclingmaterial angeschlossen ist.

In den Zeichnungen sind Ausführungsbeispiele der Erfindung schematisch dargestellt. Es zeigen:
- Fig. 1: Eine Prinzipskizze einer Mehrzahl von Plasmakam- mern, die auf einem rotierenden Plasmarad angeord- net sind und bei der das Plasmarad mit Eingabe- und Ausgaberädern gekoppelt ist.
- Fig. 2: eine Anordnung ähnlich zu Fig. 1, bei der die Plasmastationen jeweils mit zwei Plasmakammern ausgestattet sind,
- Fig. 3: eine perspektivische Darstellung eines Plasmarades mit einer Vielzahl von Plasmakammern,
- Fig. 4: eine perspektivische Darstellung einer Plasmasta- tion mit einer Kavität,
- Fig. 5: eine Vorderansicht der Vorrichtung gemäß Fig. 4 mit geschlossener Plasmakammer,
- Fig. 6: einen Querschnitt gemäß Schnittlinie VI-VI in Fig. 5,
- Fig. 7: eine Darstellung entsprechend Fig. 5 mit geöffne- ter Plasmakammer,
- Fig. 8: einen Vertikalschnitt gemäß Schnittlinie VIII-VIII in Fig. 7,
- Fig. 9: eine vergrößerte Darstellung der Plasmakammer mit zu beschichtender Flasche gemäß Fig. 6,
- Fig. 10: eine perspektivische Darstellung einer Blasstation zur Herstellung von Behältern aus Vorformlingen,
- Fig. 11: einen Längsschnitt durch eine Blasform, in der ein Vorformling gereckt und expandiert wird,
- Fig. 12: eine Skizze zur Veranschaulichung eines grundsätz- lichen Aufbaus einer Vorrichtung zur Blasformung von Behältern,
- Fig. 13: eine modifizierte Heizstrecke mit vergrößerter Heizkapazität,
- Fig. 14: eine vereinfachte Seitenansicht einer Spritzguß- einrichtung,
- Fig. 15: einen Vertikalschnitt durch eine andere Spritzguß- einrichtung,
- Fig. 16.: einen Längsschnitt durch einen Vorformling,
- Fig. 17: eine Seitenansicht eines geblasenen Behälters,
- Fig. 18: eine Blockdarstellung zur Veranschaulichung der Funktionskomponenten bei der Behälterherstellung und
- Fig. 19: eine teilweise Darstellung eines Querschnittes durch eine Behälterwandung.

Nachfolgend werden die einzelnen Funktionskomponenten beschrieben, die bei der Behälterherstellung zum Einsatz gelangen.

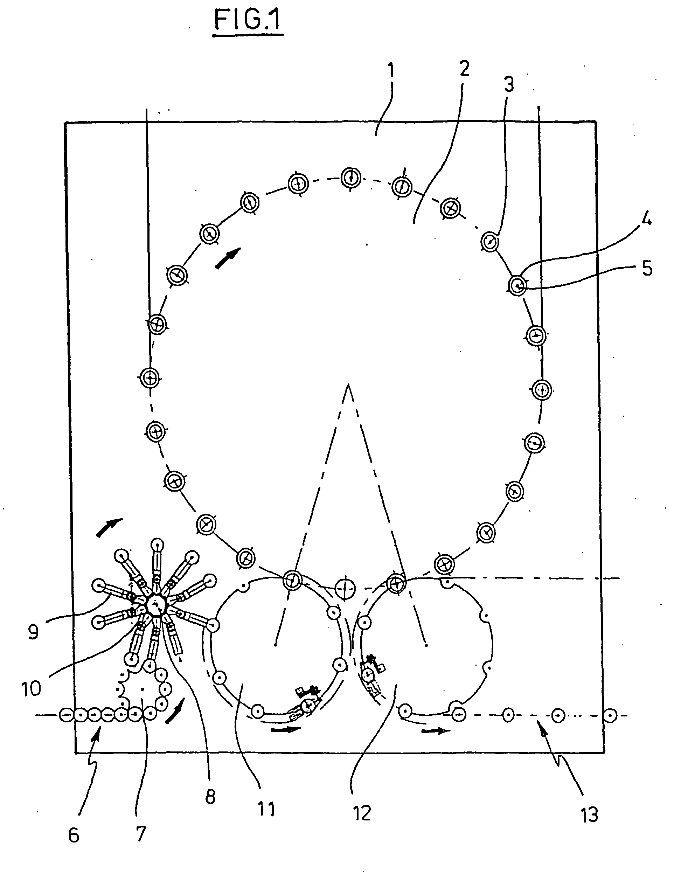

Aus der Darstellung in Fig. 1 ist ein Plasmamodul (1) zu erkennen, das mit einem rotierenden Plasmarad (2) versehen ist. Entlang eines Umfanges des Plasmarades (2) sind eine Mehrzahl von Plasmastationen (3) angeordnet. Die Plasmastationen (3) sind mit Kavitäten (4) bzw. Plasmakammern (17) zur Aufnahme von zu behandelnden Werkstücken (5) versehen. Das Plasmamodul (1) bildet die letzte Stufe bei der Behälterherstellung. Im Anschluß an die Plasmabeschichtung kann eine Befüllung der Behälter erfolgen.

Die zu behandelnden Werkstücke (5) werden dem Plasmamodul (1) im Bereich einer Eingabe (6) zugeführt und über ein Vereinzelungsrad (7) an ein Übergaberad (8) weitergeleitet, das mit positionierbaren Tragarmen (9) ausgestattet ist. Die Tragarme (9) sind relativ zu einem Sockel (10) des Übergaberades (8) verschwenkbar angeordnet, so daß eine Abstandsveränderung der Werkstücke (5) relativ zueinander durchgeführt werden kann. Hierdurch erfolgt eine Übergabe der Werkstücke (5) vom Übergaberad (8) an ein Eingaberad (11) mit einem relativ zum Vereinzelungsrad (7) vergrößerten Abstand der Werkstücke (5) relativ zueinander. Das Eingaberad (11) übergibt die zu behandelnden Werkstücke (5) an das Plasmarad (2). Nach einer Durchführung der Behandlung werden die behandelten Werkstücke (5) von einem Ausgaberad (12) aus dem Bereich des Plasmarades (2) entfernt und in den Bereich einer Ausgabestrecke (13) überführt.

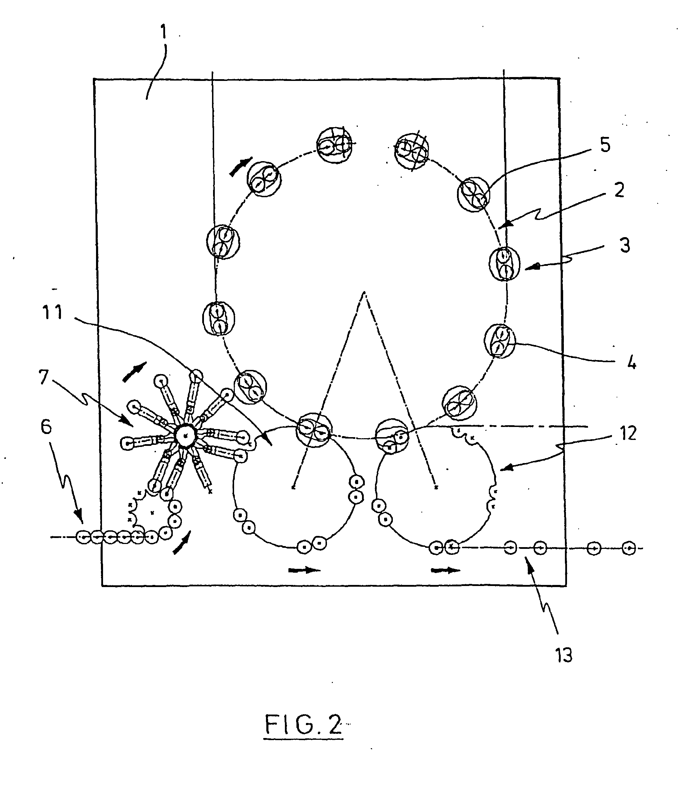

Bei der Ausführungsform gemäß Fig. 2 sind die Plasmastationen (3) jeweils mit zwei Kavitäten (4) bzw. Plasmakammern (17) ausgestattet. Hierdurch können jeweils zwei Werkstücke (5) gleichzeitig behandelt werden. Grundsätzlich ist es hierbei möglich, die Kavitäten (4) vollständig voneinander getrennt auszubilden, grundsätzlich ist es aber auch möglich, in einem gemeinsamen Kavitätenraum lediglich Teilbereiche derart gegeneinander abzugrenzen, daß eine optimale Beschichtung aller Werkstücke (5) gewährleistet ist. Insbesondere ist hierbei daran gedacht, die Teilkavitäten zumindest durch separate Mikrowelleneinkopplungen gegeneinander abzugrenzen.

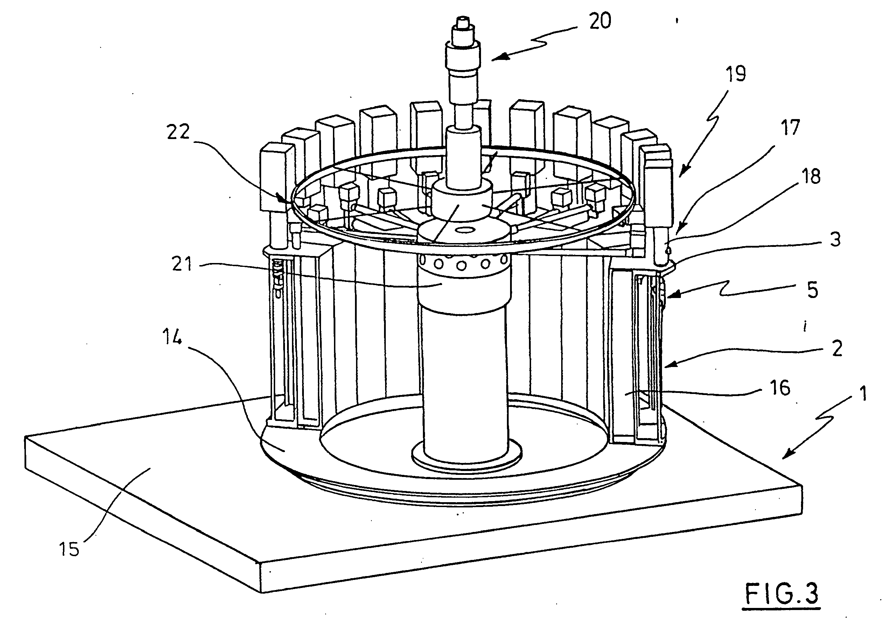

Fig. 3 zeigt eine perspektivische Darstellung eines Plasmamoduls (1) mit teilweise aufgebautem Plasmarad (2). Die Plasmastationen (3) sind auf einem Tragring (14) angeordnet, der als Teil einer Drehverbindung ausgebildet und im Bereich eines Maschinensockels (15) gelagert ist. Die Plasmastationen (3) weisen jeweils einen Stationsrahmen (16) auf, der Plasmakammern (17) haltert. Die Plasmakammern (17) weisen zylinderförmige Kammerwandungen (18) sowie Mikrowellengeneratoren (19) auf.

In einem Zentrum des Plasmarades (2) sind Drehverteiler (20, 21) angeordnet, über die die Plasmastationen (3) mit Betriebsmitteln sowie Energie versorgt werden. Zur Betriebsmittelverteilung können insbesondere Ringleitungen (22) eingesetzt werden.

Die zu behandelnden Werkstücke (5) sind unterhalb der zylinderförmigen Kammerwandungen (18) dargestellt. Unterteile der Plasmakammern (17) sind zur vereinfachung jeweils nicht eingezeichnet.

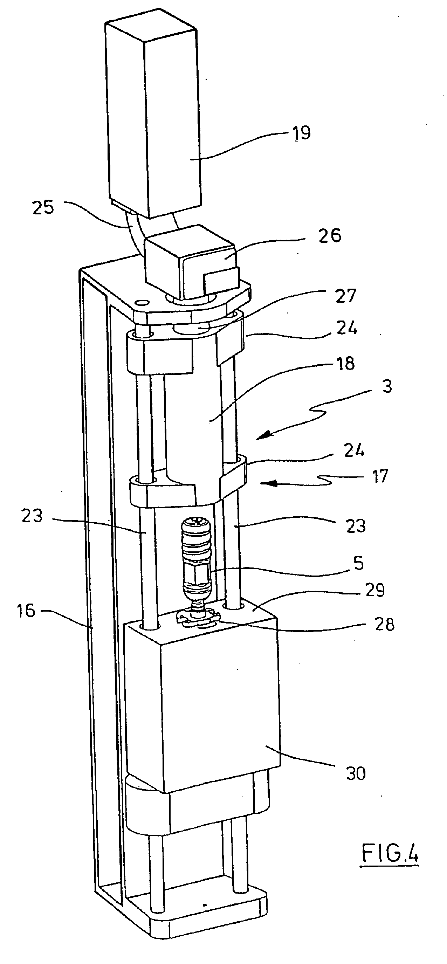

Fig. 4 zeigt eine Plasmastation (3) in perspektivischer Darstellung. Es ist zu erkennen, daß der Stationsrahmen (16) mit Führungsstangen (23) versehen ist, auf denen ein Schlitten (24) zur Halterung der zylinderförmigen Kammerwandung (18) geführt ist. Fig. 4 zeigt den Schlitten (24) mit Kammerwandung (18) in einem angehobenen Zustand, so daß das Werkstück (5) freigegeben ist.

Im oberen Bereich der Plasmastation (3) ist der Mikrowellengenerator (19) angeordnet. Der Mikrowellengenerator (19) ist über eine Umlenkung (25) und einen Adapter (26) an einen Kopplungskanal (27) angeschlossen, der in die Plasmakammer (17) einmündet. Grundsätzlich kann der Mikrowellengenerator (19) sowohl unmittelbar im Bereich des Kammerdekkels (31) als auch über ein Distanzelement an den Kammerdeckel (31) angekoppelt mit einer vorgebbaren Entfernung zum Kammerdeckel (31) und somit in einem größeren Umgebungsbereich des Kammerdeckels (31) angeordnet werden. Der Adapter (26) hat die Funktion eines Übergangselementes und der Kopplungskanal (27) ist als ein Koaxialleiter ausgebildet. Im Bereich einer Einmündung des Kopplungskanals (27) in den Kammerdeckel (31) ist ein Quarzglasfenster angeordnet. Die Umlenkung (25) ist als ein Hohlleiter ausgebildet.

Das Werkstück (5) wird im Bereich eines Dichtelementes (28) positioniert, das im Bereich eines Kammerbodens (29) angeordnet ist. Der Kammerboden (29) ist als Teil eines Kammersockels (30) ausgebildet. Zur Erleichterung einer Justage ist es möglich, den Kammersockel (30) im Bereich der Führungsstangen (23) zu fixieren. Eine andere Variante besteht darin, den Kammersockel (30) direkt am Stationsrahmen (16) zu befestigen. Bei einer derartigen Anordnung ist es beispielsweise auch möglich, die Führungsstangen (23) in vertikaler Richtung zweiteilig auszuführen.

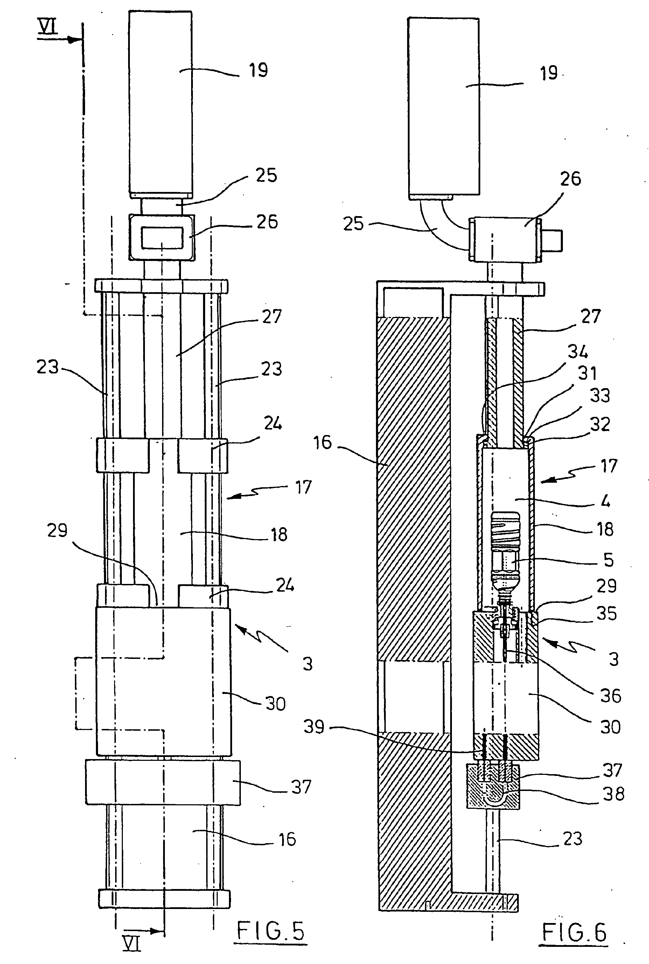

Fig. 5 zeigt eine Vorderansicht der Plasmastation (3) gemäß Fig. 3 in einem geschlossenen Zustand der Plasmakammer (17). Der Schlitten (24) mit der zylinderförmigen Kammerwandung (18) ist hierbei gegenüber der Positionierung in Fig. 4 abgesenkt, so daß die Kammerwandung (18) gegen den Kammerboden (29) gefahren ist. In diesem Positionierzustand kann die Plasmabeschichtung durchgeführt werden.

Fig. 6 zeigt in einer Vertikalschnittdarstellung die Anordnung gemäß Fig. 5. Es ist insbesondere zu erkennen, daß der Kopplungskanal (27) in einen Kammerdeckel (31) einmündet, der einen seitlich überstehenden Flansch (32) aufweist. Im Bereich des Flansches (32) ist eine Dichtung (33) angeordnet, die von einem Innenflansch (34) der Kammerwandung (18) beaufschlagt wird. In einem abgesenkten Zustand der Kammerwandung (18) erfolgt hierdurch eine Abdichtung der Kammerwandung (18) relativ zum Kammerdeckel (31). Eine weitere Dichtung (35) ist in einem unteren Bereich der Kammerwandung (18) angeordnet, um auch hier eine Abdichtung relativ zum Kammerboden (29) zu gewährleisten.

In der in Fig. 6 dargestellten Positionierung umschließt die Kammerwandung (18) die Kavität (4), so daß sowohl ein Innenraum der Kavität (4) als auch ein Innenraum des Werkstückes (5) evakuiert werden können. Zur Unterstützung einer Zuleitung von Prozeßgas ist im Bereich des Kammersokkels (30) eine hohle Lanze (36) angeordnet, die in den Innenraum des Werkstückes (5) hineinverfahrbar ist. Zur Durchführung einer Positionierung der Lanze (36) wird diese von einem Lanzenschlitten (37) gehaltert, der entlang der Führungsstangen (23) positionierbar ist. Innerhalb des Lanzenschlittens (37) verläuft ein Prozeßgaskanal (38), der in der in Fig. 6 dargestellten angehobenen Positionierung mit einem Gasanschluß (39) des Kammersockels (30) gekoppelt ist. Durch diese Anordnung werden schlauchartige Verbindungselemente am Lanzenschlitten (37) vermieden.

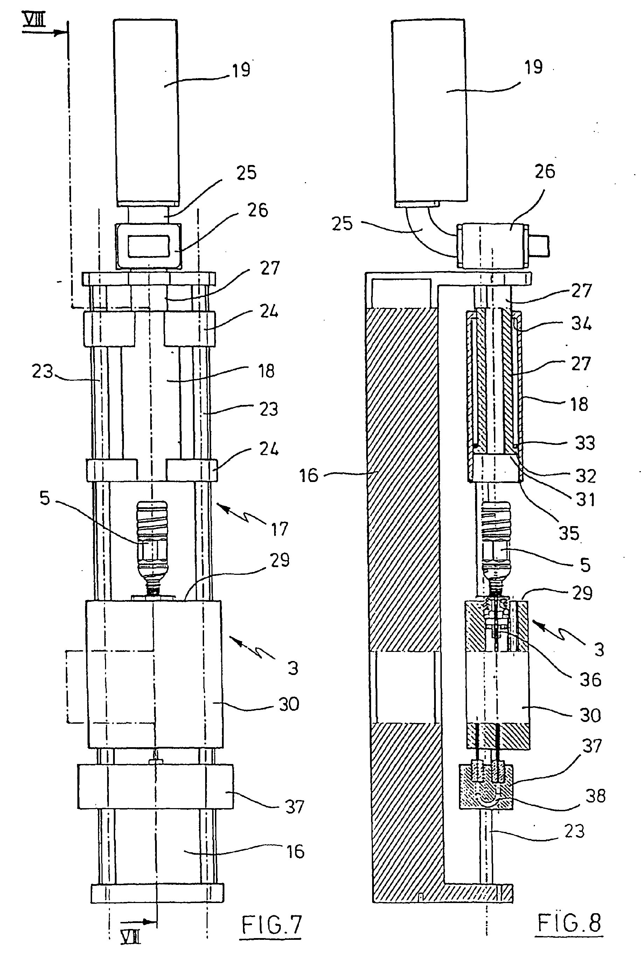

Fig. 7 und Fig. 8 zeigen die Anordnung gemäß Fig. 5 und Fig. 6 in einem angehobenen Zustand der Kammerwandung (18). In diesem Positionierungszustand der Kammerwandung (18) ist es problemlos möglich, das behandelte werkstück (5) aus dem Bereich der Plasmastation (3) zu entfernen und ein neues zu behandelndes Werkstück (5) einzusetzen. Alternativ zu der in den Zeichnungen dargestellten Positionierung der Kammerwandung (18) in einem durch Verschiebung nach oben erreichten geöffneten Zustand der Plasmakammer (17) ist es auch möglich, den Öffnungsvorgang durch eine Verschiebung einer konstruktiv modifizierten hülsenförmigen Kammerwandung in vertikaler Richtung nach unten durchzuführen.

Im dargestellten Ausführungsbeispiel besitzt der Kopplungskanal (27) eine zylinderförmige Gestaltung und ist im wesentlichen koaxial zur Kammerwandung (18) angeordnet.

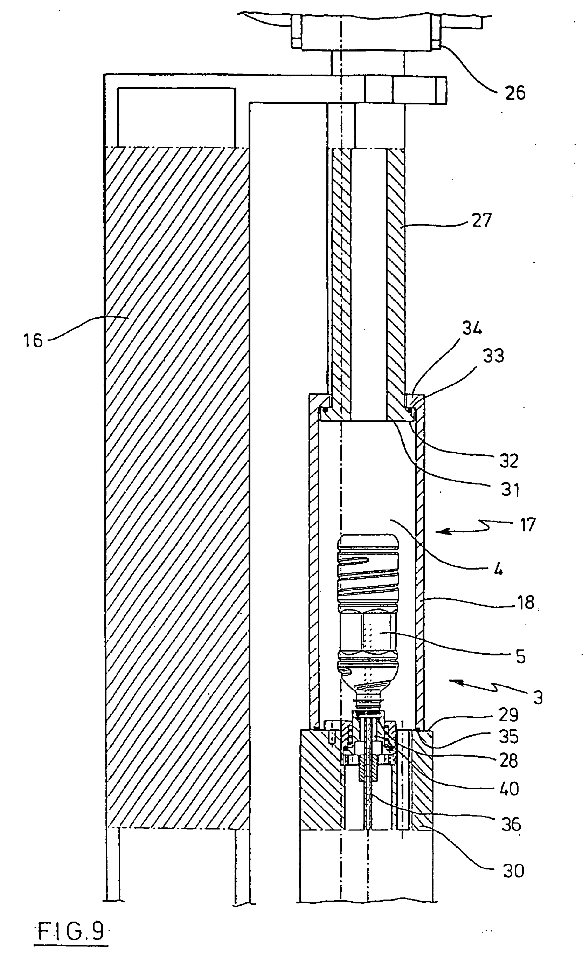

Fig. 9 zeigt den Vertikalschnitt gemäß Fig. 6 in einer vergrößerten teilweisen Darstellung in einer Umgebung der Kammerwandung (18). Zu erkennen ist insbesondere das Übergreifen des Innenflansches (34) der Kammerwandung (18) über den Flansch (32) des Kammerdeckels (31) und die Halterung des Werkstückes (5) durch das Halteelement (28). Darüber hinaus ist zu erkennen, daß die Lanze (36) durch eine Ausnehmung (40) des Halteelementes (28) hindurchgeführt ist.

Ein typischer Behandlungsvorgang wird im folgenden am Beispiel eines Beschichtungsvorganges erläutert. Das Werkstück (5) wird in einem hochgeschobenen Zustand der hülsenartigen Kammerwandung (18) in die Plasmastation (3) eingesetzt. Nach einem Abschluß des Einsetzvorganges wird die Kammerwandung (18) in ihre abgedichtete Positionierung abgesenkt und zunächst gleichzeitig eine Evakuierung sowohl der Kavität (4) als auch eines Innenraumes des Werkstückes (5) durchgeführt.

Nach einer ausreichenden Evakuierung des Innenraumes der Kavität (4) wird die Lanze (36) in den Innenraum des Werkstückes (5) eingefahren und durch eine Verschiebung des Dichtelementes (28) eine Abschottung des Innenraumes des Werkstückes (5) gegenüber dem Innenraum der Kavität (4) durchgeführt. Ebenfalls ist es möglich, die Lanze (36) bereits synchron zur beginnenden Evakuierung des Innenraumes der Kavität in das Werkstück (5) hinein zu verfahren. Der Druck im Innenraum des Werkstückes (5) wird anschließend noch weiter abgesenkt. Darüber hinaus ist auch daran gedacht, die Positionierbewegung der Lanze (36) wenigstens teilweise bereits parallel zur Positionierung der Kammerwandung (18) durchzuführen. Nach Erreichen eines ausreichend tiefen Unterdruckes wird Prozeßgas in den Innenraum des Werkstückes (5) eingeleitet und mit Hilfe des Mikrowellengenerators (19) das Plasma gezündet.

Insbesondere ist daran gedacht, mit Hilfe des Plasmas sowohl einen Haftvermittler als auch die eigentliche Barriereschicht aus Siliziumoxiden auf den inneren Oberflächen der werkstücke (5) abzuscheiden.

Die Aufbringung des Haftvermittlers kann beispielsweise in einem zweistufigen Verfahren als erste Stufe vor der Aufbringung der Barriereschicht in der zweiten Stufe erfolgen, es ist aber auch denkbar, in einem kontinuierlichen Verfahren wenigstens einen dem Werkstück (5) zugewandten Teil der Barriereschicht als Gradientenschicht auch bereits zeitgleich zum Aufbringen mindestens eines Teiles des Haftvermittlers zu erzeugen. Eine derartige Gradientenschicht kann in einfacher Weise während der Dauer eines bereits gezündeten Plasmas durch Veränderung der Zusammensetzung des Prozeßgases erzeugt werden. Eine derartige Änderung der Zusammensetzung des Prozeßgases kann abrupt durch Änderung von Ventilsteuerungen oder kontinuierlich durch Veränderung des Mischungsverhältnisses von Bestandteilen des Prozeßgases erreicht werden.

Ein typischer Aufbau einer Gradientenschicht erfolgt derart, daß in einem dem Werkstück (5) zugewandten Teil der Gradientenschicht ein zumindest überwiegender Anteil des Haftvermittlers und in einem dem Werkstück (5) abgewandten Teil der Gradientenschicht zumindest überwiegend ein Anteil des Barrierematerials enthalten ist. Ein Übergang der jeweiligen Bestandteile erfolgt zumindest in einem Teil der Gradientenschicht kontinuierlich entsprechend einem vorgebbaren Gradientenverlauf. In ähnlicher Weise ist es möglich, sowohl die Schicht zur Haftvermittlung als auch die Barriereschicht selbst als Gradientenschichten zu erzeugen.

Der Innenraum der Plasmakammer (17) und der Innenraum des Werkstückes (5) werden zunächst gemeinsam auf ein Druckniveau von etwa 20 mbar bis 50 mbar evakuiert. Anschließend wird der Druck im Innenraum des Werkstückes (5) weiter auf etwa 0,1 mbar abgesenkt. Während der Durchführung des Behandlungsvorganges wird ein Unterdruck von etwa 0,3 mbar aufrechterhalten.

Nach einem Abschluß des Beschichtungsvorganges wird die Lanze (36) wieder aus dem Innenraum des Werkstückes (5) entfernt und die Plasmakammer (17) sowie der Innenraum des Werkstückes (5) werden belüftet. Nach Erreichen des Umgebungsdruckes innerhalb der Kavität (4) wird die Kammerwandung (18) wieder angehoben, um eine Entnahme des beschichteten Werkstückes (5) sowie eine Eingabe eines neuen zu beschichtenden werkstückes (5) durchzuführen. Zur Ermöglichung einer seitlichen Positionierung des werkstückes (5) wird das Dichtelement (28) mindestens bereichsweise wieder in den Kammersockel (30) hinein verfahren.

Eine Positionierung der Kammerwandung (18), des Dichtelementes (28) und / oder der Lanze (36) kann unter Verwendung unterschiedlicher Antriebsaggregate erfolgen. Grundsätzlich ist die Verwendung pneumatischer Antriebe und / oder elektrischer Antriebe, insbesondere in einer Ausführungsform als Linearmotor, denkbar.

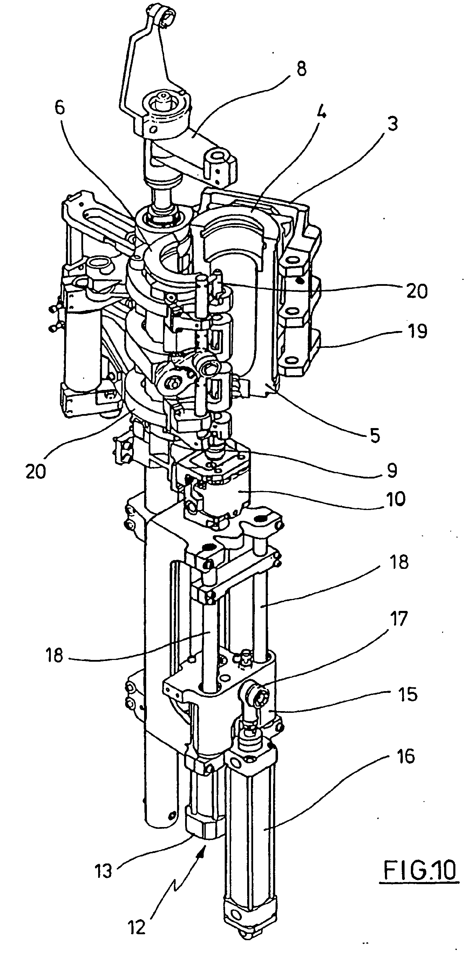

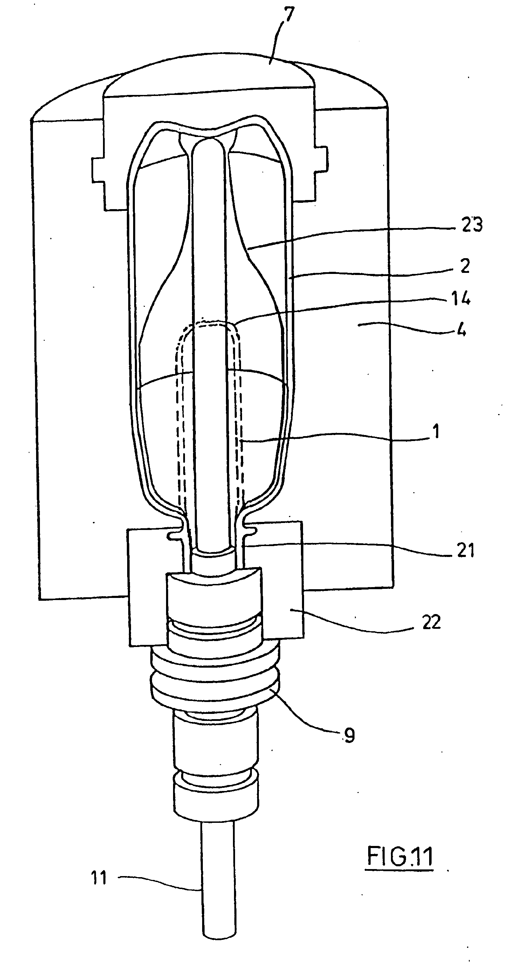

Eine Vorrichtung zur Blasformung eines in Fig. 11 dargestellten Behälters (42) besteht gemäß Fig. 10 im wesentlichen aus einer Blasstation (43), die mit einer Blasform (44) versehen ist, in die ein ebenfalls in Fig. 11 dargestellter Vorformling (41) einsetzbar ist. Der Vorformling (41) kann ein spritzgegossenes Teil aus Polyethylenterephthalat sein. Zur Ermöglichung eines Einsetzens des Vorformling (41) in die Blasform (44) und zur Ermöglichung eines Herausnehmens des fertigen Behälters (42) besteht die Blasform (44) aus Formhälften (45, 46) und einem Bodenteil (47), das von einer Hubvorrichtung (48) positionierbar ist. Der Vorformling (41) kann im Bereich der Blasstation (43) von einem Transportdorn (49) gehalten sein, der gemeinsam mit dem Vorformling (41) eine Mehrzahl von Behandlungsstationen innerhalb der Vorrichtung durchläuft. Es ist aber auch möglich, den Vorformling (41) beispielsweise über Zangen oder andere Handhabungsmittel direkt in die Blasform (44) einzusetzen. Der Behälter (42) stellt eine beispielhafte Realisierung des im Zusammenhang mit dem Plasmamodul (1) erläuterten Werkstückes (5) dar.

Zur Ermöglichung einer Druckluftzuleitung ist unterhalb des Transportdornes (49) ein Anschlußkolben (50) angeordnet, der dem Vorformling (41) Druckluft zuführt und gleichzeitig eine Abdichtung relativ zum Transportdorn (49) vornimmt. Bei einer abgewandelten Konstruktion ist es grundsätzlich aber auch denkbar, feste Druckluftzuleitungen zu verwenden.

Eine Reckung des Vorformlings (41) erfolgt mit Hilfe einer in Fig. 11 erkennbaren Reckstange (51), die von einem Zylinder (52) positioniert wird. Grundsätzlich ist es aber auch denkbar, eine mechanische Positionierung der Reckstange (51) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (43) auf einem rotierenden Blasrad angeordnet sind. Eine Verwendung von Zylindern (52) ist zweckmäßig, wenn ortsfest angeordnete Blasstationen (43) vorgesehen sind.

Bei der in Fig. 10 dargestellten Ausführungsform ist das Recksystem derart ausgebildet, daß eine Tandem-Anordnung von zwei Zylindern (52) bereitgestellt ist. Von einem Primärzylinder (53) wird die Reckstange (51) zunächst vor Beginn des eigentlichen Reckvorganges bis in den Bereich eines in Fig. 11 dargestellten Bodens (54) des Vorformlings (41) gefahren. Während des eigentlichen Reckvorganges wird der Primärzylinder (53) mit ausgefahrener Reckstange gemeinsam mit einem den Primärzylinder (53) trägenden Schlitten (55) von einem Sekundärzylinder (56) oder über eine Kurvensteuerung positioniert. Insbesondere ist daran gedacht, den Sekundärzylinder (56) derart kurvengesteuert einzusetzen, daß von einer Führungsrolle (57), die während der Durchführung des Reckvorganges an einer Kurvenbahn entlang gleitet, eine aktuelle Reckposition vorgegeben wird. Die Führungsrolle (57) wird vom Sekundärzylinder (56) gegen die Führungsbahn gedrückt. Der Schlitten (55) gleitet entlang von zwei Führungselementen (58).

Nach einem Schließen der im Bereich von Trägern (59, 60) angeordneten Formhälften (45, 46) erfolgt eine Verriegelung der Träger (59, 60) relativ zueinander mit Hilfe einer Verriegelungseinrichtung (80).

Zur Anpassung an unterschiedliche Formen eines Mündungsabschnittes (61) des Vorformlings (41) ist gemäß Fig. 11 die Verwendung separater Gewindeeinsätze (62) im Bereich der Blasform (44) vorgesehen. Fig. 11 zeigt zusätzlich zum geblasenen Behälter (42) auch gestrichelt eingezeichnet den Vorformling (41) und schematisch eine sich entwickelnde Behälterblase (63).

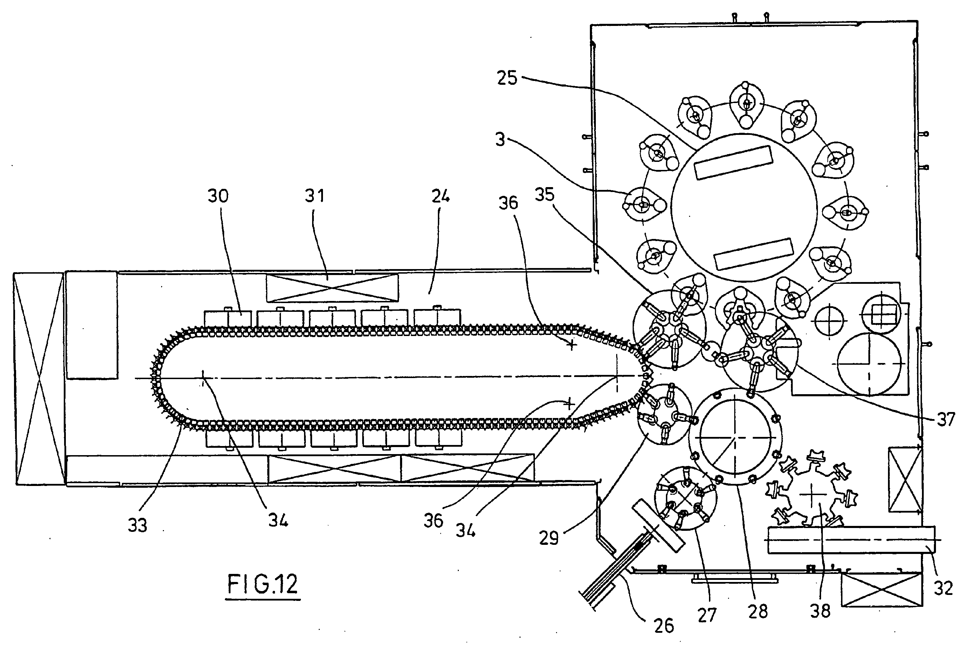

Fig. 12 zeigt den grundsätzlichen Aufbau einer Blasmaschine, die mit einer Heizstrecke (64) sowie einem rotierenden Blasrad (65) versehen ist. Ausgehend von einer Vorformlingseingabe (66) werden die vorformlinge (41) von Übergaberädern (67, 68, 69) in den Bereich der Heizstrecke (64) transportiert. Entlang der Heizstrecke (64) sind Heizstrahler (70) sowie Gebläse (71) angeordnet, um die Vorformlinge (41) zu temperieren. Nach einer ausreichenden Temperierung der Vorformlinge (41) werden diese an das Blasrad (65) übergeben, in dessen Bereich die Blasstationen (43) angeordnet sind. Die fertig geblasenen Behälter (42) werden von weiteren Übergaberädern einer Ausgabestrecke (72) zugeführt.

Um einen Vorformling (41) derart in einen Behälter (42) umformen zu können, daß der Behälter (42) Materialeigenschaften aufweist, die eine lange Verwendungsfähigkeit von innerhalb des Behälters (42) abgefüllten Lebensmitteln, insbesondere von Getränken, gewährleisten, müssen spezielle Verfahrensschritte bei der Beheizung und Orientierung der Vorformlinge (41) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (41) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 12 ist ebenfalls erkennbar, daß bei der dargestellten Ausführungsform die Heizstrecke (64) aus einer Vielzahl umlaufender Transportelemente (73) ausgebildet ist, die kettenartig aneinandergereiht und entlang von Umlenkrädern (74) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (69) und einem Eingaberad (75) zugewandten Ausdehnung der Heizstrecke (64) ein einzelnes relativ groß dimensioniertes Umlenkrad (74) und im Bereich von benachbarten Umlenkungen zwei vergleichsweise kleiner dimensionierte Umlenkräder (76) verwendet. Grundsätzlich sind aber auch beliebige andere Führungen denkbar.

Zur Ermöglichung einer möglichst dichten Anordnung des Übergaberades (69) und des Eingaberades (75) relativ zueinander erweist sich die dargestellte Anordnung als besonders zweckmäßig, da im Bereich der entsprechenden Ausdehnung der Heizstrecke (64) drei Umlenkräder (74, 76) positioniert sind, und zwar jeweils die kleineren Umlenkräder (76) im Bereich der Überleitung zu den linearen Verläufen der Heizstrecke (64) und das größere Umlenkrad (74) im unmittelbaren Übergabebereich zum Übergaberad (69) und zum Eingaberad (75). Alternativ zur Verwendung von kettenartigen Transportelementen (73) ist es beispielsweise auch möglich, ein rotierendes Heizrad zu verwenden.

Nach einem fertigen Blasen der Behälter (42) werden diese von einem Entnahmerad (77) aus dem Bereich der Blasstationen (43) herausgeführt und über das Übergaberad (68) und ein Ausgaberad (78) zur Ausgabestrecke (72) transportiert.

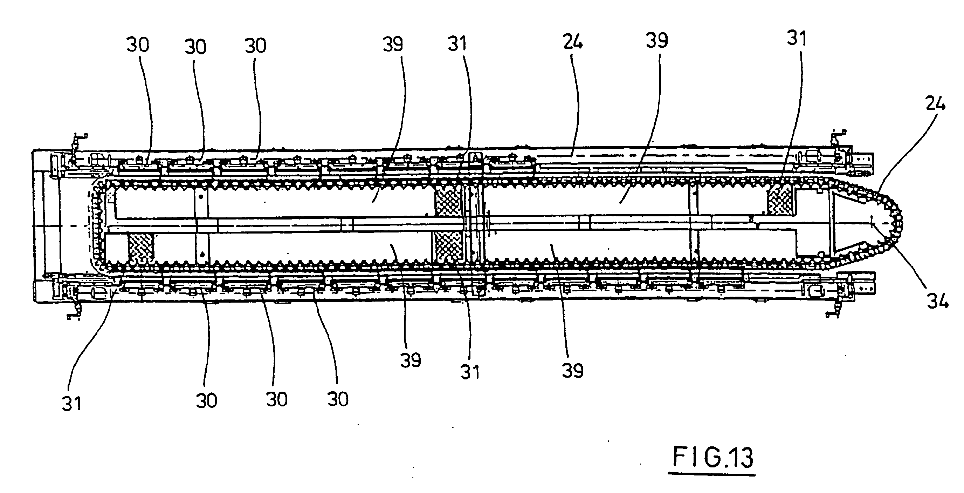

In der in Fig. 13 dargestellten modifizierten Heizstrecke (64) können durch die größere Anzahl von Heizstrahlern (70) eine größere Menge von vorformlingen (41) je Zeiteinheit temperiert werden. Die Gebläse (71) leiten hier Kühlluft in den Bereich von Kühlluftkanälen (79) ein, die den zugeordneten Heizstrahlern (70) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (41) realisiert. Die Kühlluftkanäle (79) können im Bereich von den Heizstrahlern (70) gegenüberliegenden Oberflächen Reflektoren für die Heizstrahlung bereitstellen, ebenfalls ist es möglich, über die abgegebene Kühlluft auch eine Kühlung der Heizstrahler (70) zu realisieren.

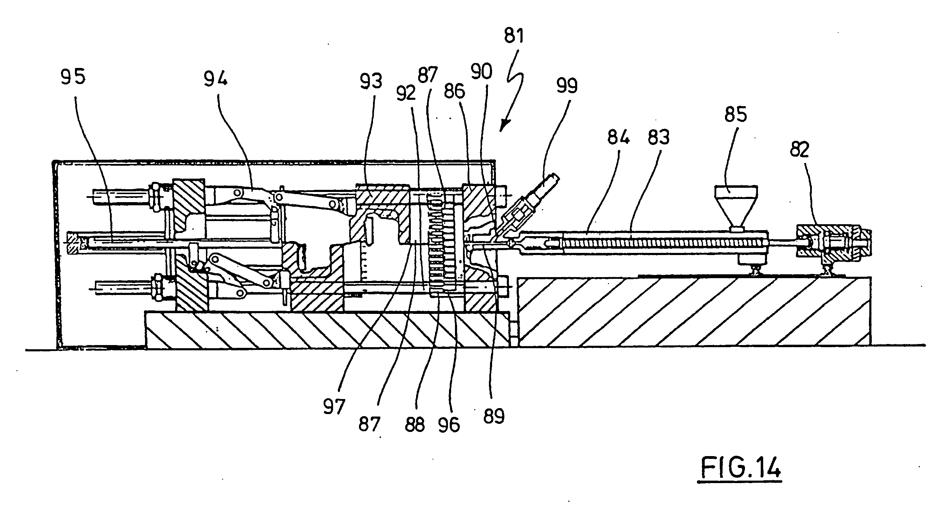

Fig. 14 zeigt in einer Seitenansicht den prinzipiellen Aufbau einer Spritzgußeinrichtung (81). Eine Einspritzeinheit (82) treibt hierbei eine Plastifizierschnecke (83) an, die innerhalb einer Hülse (84) geführt ist. Eine Zufuhr von granulatartigem Kunststoff erfolgt mit Hilfe eines Harztrichters (85). Entlang der Hülse (84) sind nicht dargestellte Heizelemente zur Erhitzung des zugeführten Kunststoffgranulats angeordnet.

Im Bereich einer Spannplatte (86) ist ein feststehender Werkzeugteil (96) eines Spritzgußwerkzeuges (87) mit Kavitäten (88) angeordnet. Die Kavitäten (88) sind über einen Schmelzekanal (89) mit dem Innenraum der Hülse (84) verbunden. Ebenfalls mündet in den Schmelzekanal (89) ein Anschlußkanal (90) einer Nachdrückeinheit (91) ein. Die Zufuhr des plastifizierten Kunststoffes zu den Kavitäten (88) wird über nicht dargestellte Steuereinrichtungen koordiniert.

Entlang von Holmen (92) ist eine bewegliche Spannplatte (93) positionierbar, auf der ein bewegliches Werkzeugteil (97) des Spritzgußwerkzeuges (87) montiert ist. In einem gegeneinander verfahrenen Zustand der Spannplatten (86, 93) begrenzen beide Werkzeugteile (96, 97) des Spritzgußwerkzeuges (87) gemeinsam die Kavitäten (88).

Eine Positionierung der beweglichen Spannplatte (93) erfolgt mit Hilfe eines Verstellmechanismus (94), der von einem Verschlußzylinder (95) betätigt wird. Der Verstellmechanismus (94) kann unter Verwendung von Kniehebeln konstruiert sein.

Gemäß der Ausführungsform in Fig. 14 sind die Kavitäten (88) mit ihren Längsachsen in horizontaler Richtung angeordnet.

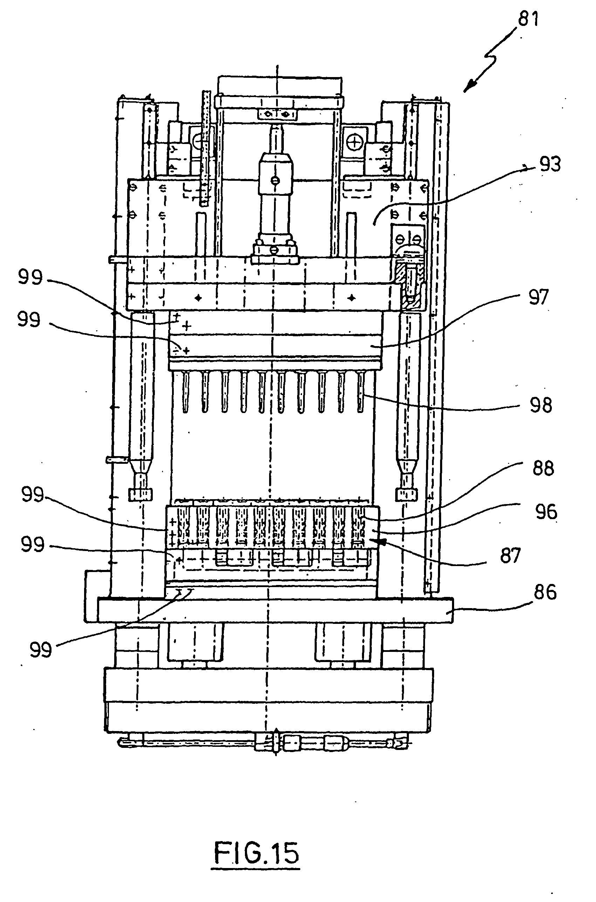

Fig. 15 zeigt eine Ausführungsform, bei der die Kavitäten (88) mit Längsachsen im wesentlichen in vertikaler Richtung positioniert sind. Auch bei dieser Ausführungsform besteht das Spritzgußwerkzeug (87) aus einem feststehenden Werkzeugteil (96) und einem beweglichen Werkzeugteil (97). Das feststehende Werkzeugteil (96) ist mit den Kavitäten (88) versehen, in die Spritzgußkerne (98) einfahrbar sind. Nach einem Einfahren des beweglichen Werkzeugteiles (97) in das feststehende Werkzeugteil (96) sind die Kavitäten (88) mit einer Kontur ähnlich zur Form von Reagenzgläsern versehen.

Insbesondere ist aus der Darstellung in Fig. 15 auch erkennbar, daß sowohl im Bereich des feststehenden Werkzeugteiles (96) als auch im Bereich des beweglichen Werkzeugteiles (97) Anschlüsse (99) zur Zuführung und Ableitung eines oder mehrerer Kühlmedien vorgesehen sind. Die Anschlüsse (99) münden in bei dieser Darstellung nicht zu sehende Kühlkanäle ein, die durch die Werkzeugteile (96, 97) hindurch verlaufen.

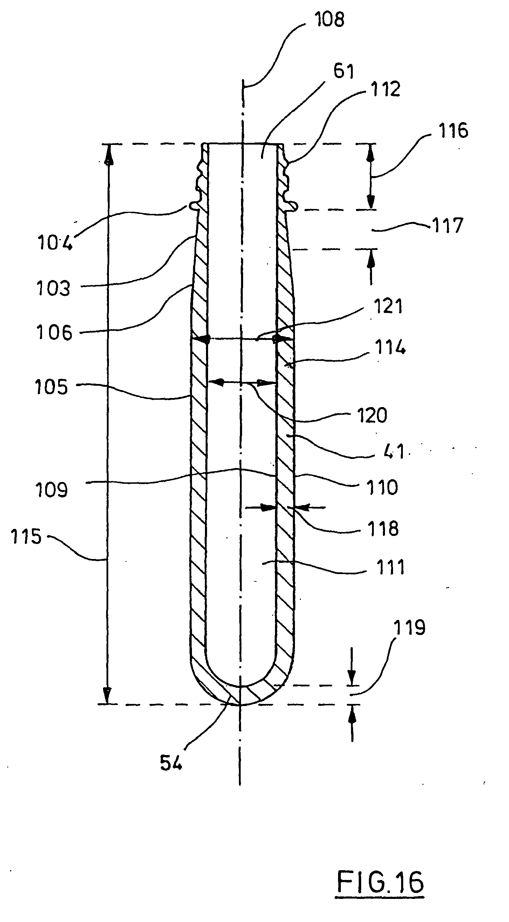

Ein vorformling (41) besteht entsprechend der Ausführungsform in Fig. 16 aus einem Mündungsabschnitt (61), einem den Mündungsabschnitt (61) von einem Halsbereich (103) trennenden Stützring (104), einem den Halsbereich (103) in einen Wandungsabschnitt (105) überleitenden Schulterbereich (106) sowie einem Boden (54). Der Stützring (104) überkragt den Mündungsabschnitt (61) quer zu einer Vorformlingslängsachse (108). In der Region des Schulterbereiches (106) erweitert sich der Außendurchmesser des Vorformlings (41) ausgehend vom Halsbereich (103) in Richtung auf den Wandungsabschnitt (105). Bei einem aus dem Vorformling (41) herzustellenden Behälter (42) bildet der Wandungsabschnitt (105) im wesentlichen die Seitenwandung des Behälters (42) aus. Der Boden (54) ist gerundet ausgebildet.

Der Mündungsabschnitt (102) kann beispielsweise mit einem Außengewinde (112) versehen sein, das es ermöglicht, beim fertigen Behälter (42) einen Schraubverschluß aufzusetzen. Es ist aber ebenfalls möglich, den Mündungsabschnitt (102) mit einer Außenwulst zu versehen, um eine Angriffsfläche für einen Kronkorken zu schaffen. Darüber hinaus sind auch eine Vielzahl weiterer Gestaltungen denkbar, um ein Aufsetzen von Steckverschlüssen zu ermöglichen.

Aus der Darstellung in Fig. 16 ist ersichtlich, daß der Wandungsabschnitt (105) eine Innenfläche (109) sowie eine Außenfläche (110) aufweist. Die Innenfläche (109) begrenzt einen Vorformlingsinnenraum (111).

Im Schulterbereich (106) kann sich die Dicke einer Vorformlingswandung (114) ausgehend vom Halsbereich (103) in Richtung auf den Wandungsbereich (105) mit zunehmender Wandstärke erstrecken. In Richtung der Vorformlingslängsachse (108) weist der Vorformling (41) eine Vorformlingslänge (115) auf. In Richtung der Vorformlingslängsachse (108) erstrecken sich der Mündungsbereich (102) und der Stützring (104) mit einer gemeinsamen Mündungslänge (116). Der Halsbereich (103) weist im Bereich der Vorformlingslängsachse (108) eine Halslänge (117) auf. Im Halsbereich (103) erstreckt sich der Vorformling (103) vorzugsweise mit konstanter Wanddicke.

Im Wandungsbereich (105) weist der Vorformling (41) eine Wanddicke (118) auf und im Bereich des Bodens (107) ist eine Bodendicke (119) anzutreffen. Eine weitere Dimensionierung des Vorformlings (41) erfolgt mit Hilfe eines Innendurchmessers (120) und eines Außendurchmessers (121), die im annähernd zylindrisch verlaufenden Wandungsbereich (105) gemessen werden.

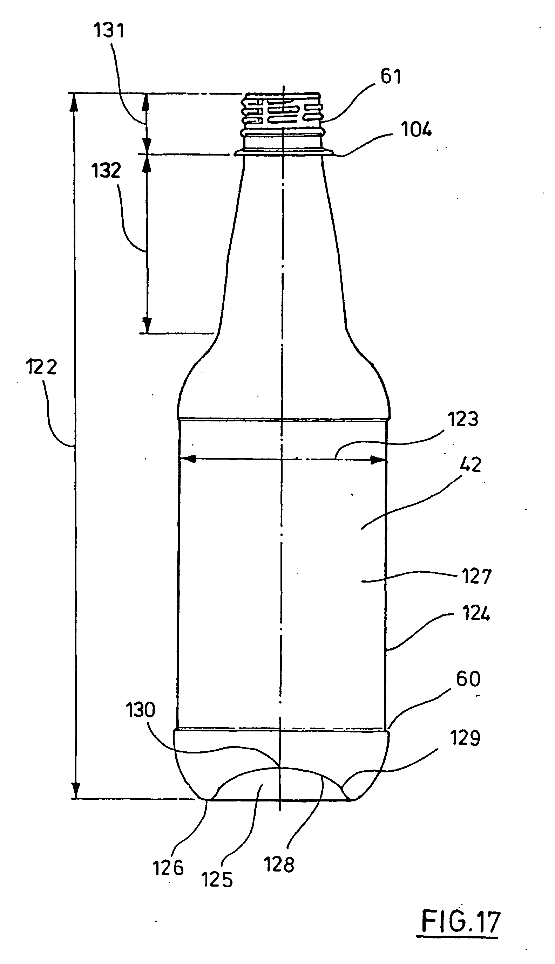

Bei dem in Fig. 17 dargestellten flaschenförmigen Behälter (42) sind im wesentlichen unverändert der Mündungsabschnitt (61) und der Stützring (104) anzutreffen. Der weitere Bereich des Behälters (42) ist durch die durchgeführte biaxiale Orientierung sowohl in Querrichtung als auch in Längsrichtung relativ zum Vorformling (41) expandiert. Der Behälter (42) weist hierdurch eine Behälterlänge (122) und einen Behälterdurchmesser (123) auf, der in Anbetracht der zu berücksichtigenden Genauigkeiten im Folgenden nicht bezüglich des konkreten Innendurchmessers beziehungsweise Außendurchmessers unterschieden werden soll.

Fig. 17 zeigt unter anderem den Bodenbereich des blasgeformten Behälters (42). Der Behälter (42) weist eine Seitenwandung (124) und einen Behälterboden (125) auf. Der Behälterboden (125) besteht bei dem dargestellten Ausführungsbeispiel aus einem Standring (126) und einem in Richtung auf einen Behälterinnenraum (127) nach innen gewölbtem Dom (128). Der Dom (128) ist aus einer Domschräge (129) und einem Zentrum (130) ausgebildet.

Der Behälter (42) weist eine Behältermündungslänge (131) und eine Behälterhalslänge (132) auf, wobei zumindest die Behältermündungslänge (131) in der Regel gleich der Mündungslänge (116) des Vorformlings (41) ist.

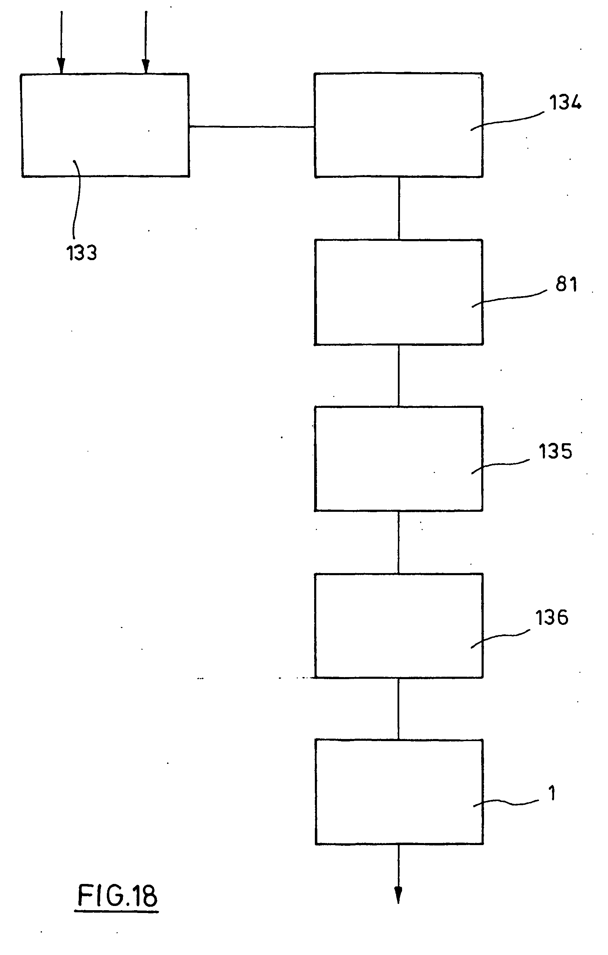

Fig. 18 veranschaulicht schematisch das Zusammenwirken der einzelnen Produktionskomponenten für die Herstellung eines gebrauchsfertigen Behälters (42). Im Bereich eines Reaktors (133) werden die zur Herstellung des thermoplastischen Kunststoffes erforderlichen Komponenten miteinander gemischt und einer chemischen Reaktion unterzogen. Der vom Reaktor (133) erzeugte thermoplastische Kunststoff wird anschließend einem Schmelzespeicher (134) zugeführt. Der Schmelzespeicher (134) überbrückt die kontinuierliche Produktion an thermoplastischem Kunststoff durch den Reaktor (133) und die zyklische Abnahme von thermoplastischem Material durch die Spritzgußeinrichtung (81). Typischerweise wird der Schmelzespeicher (134) thermisch isoliert, so daß ein möglichst geringer Wärmeverlust auftritt.

Bei der Durchführung eines sogenannten zweistufigen Verfahrens zur Behälterherstellung werden die von der Spritzgußeinrichtung (81) hergestellten Vorformlinge (41) zunächst einem Zwischenspeicher (135) zugeführt und kühlen hier auf Umgebungstemperatur ab. Aus dem Bereich des Zwischenspeichers (135) erfolgt ein Weitertransport der Vorformlinge (41) zu einer Blaseinrichtung (136), die mit den bereits erläuterten Blasstationen (43) ausgestattet ist. Bei einer Durchführung eines sogenannten einstufigen Verfahrens entfällt der Zwischenspeicher (135) entweder vollständig oder es erfolgt eine nur relativ kurzfristige Zwischenspeicherung ohne eine Abkühlung der Vorformlinge (41) auf Umgebungstemperatur.

Nach einer Umformung der Vorformlinge (41) in Behälter (42) werden die Behälter (42) von der Blaseinrichtung (136) an das Plasmamodul (1) übergeben, um hier die erforderliche Oberflächenbeschichtung aufzubringen.

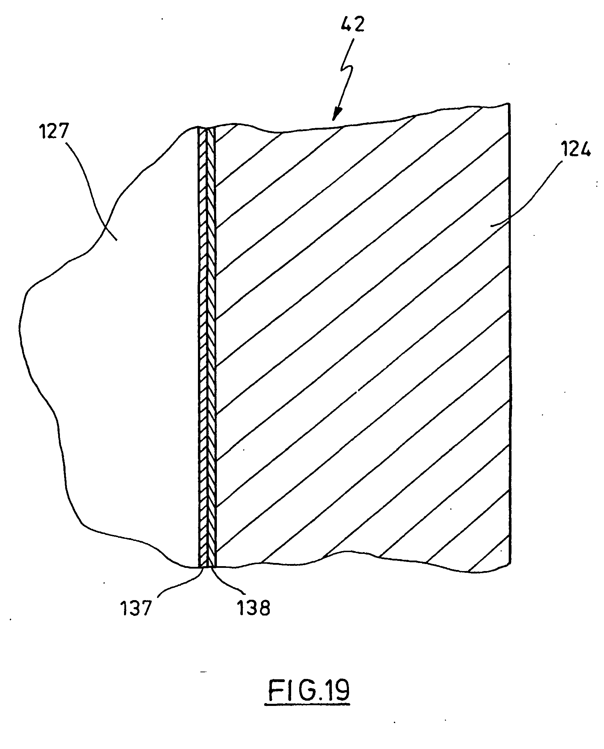

Fig. 19 veranschaulicht die Anordnung einer durch das Plasmaverfahren erzeugten Barriereschicht (137) auf der Wandung des Behälters (42). Beim dargestellten Ausführungsbeispiel ist die Barriereschicht (137) unter Verwendung einer Haftschicht (138) mit der Behälterwandung verbunden. Grundsätzlich ist es aber auch denkbar, die Barriereschicht (137) entweder unmittelbar auf der Behälterschicht anzuordnen oder einen fließenden Übergang zwischen den Schichten (137, 138) in Form einer Gradientenschicht zu realisieren.

Die an den Innenraum des Behälters abgebaren Bestandteile können beispielsweise auch dadurch entstehen, daß das Material des Behälters durch Alterung oder einwirkende äußere Einflüsse abgebaut wird. Generell ermöglicht die Verwendung der innenseitigen Behälterbeschichtung auch die Verwendung von Materialien, die bei einer Einwirkung des Füllgutes angegriffen oder zersetzt würden. Schließlich ermöglicht die Verwendung der Innenraumbeschichtung die Verwendung von Materialien mit erhöhten Schadstoffanteilen, die ansonsten nicht zur Verpackung der vorgesehenen Produkte verwendet werden könnten. Eine bevorzugte Anwendung besteht bei der Verpackung von flüssigen Lebensmitteln, bei denen eine Verwendung unbeschichteter Behältermaterialien zu einer Kontamination der Lebensmittel oder zu einer Deformation der Behälter führen würde.

## Patentansprüche

1. Behälter, der mit einem Getränk gefükt ist, und der eine Wandung aus einem thermoplastischen Kunststoff besitzt, wobei der Kunststoff, mindestens bereichsweise mindestens einen an das Getränk abgebbaren Bestandteil enthält, der mit einem Anteil im thermoplastischen Kunststoff enthalten ist, der oberhalb eines Anteils liegt, der in einem für die Verpackung des Getränks vorgesehenen Standard-Kunststoff enthalten ist wobei die Wandung aus einem einlagigen Material ausgebildet ist und im Bereich ihrer dem Innenraum zugewandten Oberfläche mindestens bereichsweise derart mit einer unter Anwendung eines Plasmaverfahrens aufgebrachten Oberflächenbeschichtung versehen ist, daß die Abgaberate des Bestandteiles aus dem thermoplastischen Kunststoff heraus und durch die Oberflächenbeschichtung hindurch höchsten gleich der Abgaberate bei Verwendung eines thermoplastischen Kunststoffes mit einem Anteil des abgebbaren Bestandteiles im Bereich der Abgaberate eines unbeschichteten Standardmaterials sowie ohne Verwendung einer Innenbeschichtung realisiert ist.

2. Behälter nach Anspruch 1, **dadurch gekennzeichnet, daß** der thermoplastische Kunststoff mindestens zum Teil aus Recyclingmaterial ausgebildet ist.

3. Behälter nach Anspruch 1 oder 2, **dadurch gekennzeichnet, daß** der Kunststoff einen Gehalt an Acetaldehyd von mindestens 10 ppm aufweist.

4. Behälter nach einem der Ansprüche 1 bis 3, **dadurch gekennzeichnet, daß** der Kunststoff Anteile eines Katalysators enthält.

5. Behälter nach einem der Ansprüche 1 bis 4, **dadurch gekennzeichnet, daß** die Oberflächenbeschichtung als mindestens eine Schicht aus einem Siliziumoxid der allgemeinen Formel SiOx aufgebracht ist.

6. Behälter nach einem der Ansprüche 1 bis 5, **dadurch gekennzeichnet, daß** eine Formgebung entsprechend einer Flasche realisiert ist.

7. Behälter nach einem der Ansprüche 1 bis 6, **dadurch gekennzeichnet, daß** der Kunststoff mindestens zum Teil als PET ausgebildet ist.

8. Behälter nach einem der Ansprüche 1 bis 7, **dadurch gekennzeichnet, daß** die Oberflächenbeschichtung unter Verwendung eines Haftvermittlers auf die Oberfläche aufgebracht ist.

9. Vorrichtung zur Herstellung von Vorformlingen zur Herstellung eines Behälters nach Anspruch 1-8 (41) aus einem thermoplastischen Material, die eine Spritzgußeinrichtung (81) mit Kavitäten (88) für die Vorformlinge (41) aufweist, wobei die Spritzgußeinrichtung (81) mit einem Reaktor (133) zur Herstellung des thermoplastischen Materials gekoppelt ist und über einen Transportweg für die Vorformlinge (41) mit einer Blaseinrichtung (136) zur Herstellung der Behälter (42) gekoppelt ist, daß die Blaseinrichtung (136) mit einem Plasmamodul (1) zur Erzeugung der Barriereschicht (137) auf dem Behälter (42) gekoppelt ist.

10. Vorrichtung nach Anspruch 9, **dadurch gekennzeichnet, daß** zwischen dem Reaktor und der Spritzgußeinrichtung mindestens ein Zwischenspeicher für geschmolzenes thermoplastisches Material angeordnet ist.

11. Vorrichtung nach Anspruch 10, **dadurch gekennzeichnet, daß** eine Befüllung und Entleerung des Zwischenspeichers gesteuert durch eine Hubbewegung eines Kolbens erfolgt.

12. Vorrichtung nach einem der Ansprüche 9 bis 11, **dadurch gekennzeichnet, daß** der Reaktor als eine Einrichtung zur Herstellung von PET ausgebildet ist.

13. Vorrichtung nach einem der Ansprüche 9 bis 12, **dadurch gekennzeichnet, daß** der Reaktor eine Mischeinrichtung zur Zuführung eines Scavengers aufweist.

14. Vorrichtung nach einem der Ansprüche 9 bis 13, **dadurch gekennzeichnet, daß** mindestens zwei Spritzgußeinrichtungen an den Reaktor angeschlossen sind.

15. Vorrichtung nach Anspruch 14, **dadurch gekennzeichnet, daß** relativ zueinander unterschiedliche Spritzgußeinrichtungen an den Reaktor angeschlossen sind.

16. Vorrichtung nach einem der Ansprüche 9 bis 15, **dadurch gekennzeichnet, daß** an eine Kopplung zwischen dem Reaktor und der Spritzgußeinrichtung eine Mischeinrichtung zur Beimengung von plastifiziertem Recyclingmaterial angeschlossen ist.

17. Verfahren zur Herstellung von Behältern (42) nach Anspruch 1-8 aus einem thermoplastischen Kunststoff, bei dem der Kunststoff in einem Reaktor (133) hergestellt und anschließend von einer Spritzgußeinrichtung (81) zu Vorformlingen (41) geformt wird sowie bei dem die Vorformlinge (41) blastechnisch in die Behälter (42) umgeformt und anschließend mindestens bereichsweise im Bereich ihrer inneren Oberfläche mit einer durch Plasmaeinwirkung hergestellten Barriereschicht (137) versehen werden, wobei der Reaktor (133) unmittelbar an die Spritzgußeinrichtung (81) angeschlossen wird, und der vom Reaktor (133) hergestellte Kunststoff als Schmelze vom Reaktor (133) zur Spritzgußeinrichtung (81) geleitet wird.

18. Verfahren nach Anspruch 17, **dadurch gekennzeichnet, daß** mehrere Spritzgußeinrichtungen von einem gemeinsamen Reaktor versorgt werden.

19. Verfahren nach Anspruch 17 oder 18, **dadurch gekennzeichnet, daß** vom Reaktor ein Polymer hergestellt wird.

20. Verfahren nach einem der Ansprüche 17 bis 19, **dadurch gekennzeichnet, daß** vom Reaktor PET hergestellt wird.

21. verfahren nach einem der Ansprüche 17 bis 20, **dadurch gekennzeichnet, daß** mindestens ein Teil der vom Reaktor hergestellten Schmelze an Kunststoff vor einer spritzgußtechnischen Verarbeitung zwischengespeichert wird.

22. Verfahren nach einem der Ansprüche 17 bis 21, **dadurch gekennzeichnet, daß** der Schmelze vor einem Einspritzen in Kavitäten der Spritzgußeinrichtung Recyclingmaterial beigemischt wird.

23. Verfahren nach einem der Ansprüche 17 bis 22, **dadurch gekennzeichnet, daß** dem Material mindestens ein Scavenger beigemischt wird.

## Claims

1. Container which is filled with a drink and which has a wall made of a thermoplastics material, the plastics material at least partially containing at least one constituent which may be discharged into the drink, which is contained in a proportion in the thermoplastics material which is above a proportion which is contained in a standard plastics material provided for packaging the drink, the wall being configured from a single-layered material and in the region of its surface facing the interior being provided at least partially with a surface coating applied by using a plasma method, such that the discharge rate of the constituent from the thermoplastics material and through the surface coating is, at most, equal to the discharge rate which, when using a thermoplastics material having a proportion of the constituent which may be discharged, is in the region of the discharge rate of an uncoated standard material and without using an inner coating.

2. Container according to Claim 1, **characterised in that** the thermoplastics material is formed at least partially from recycled material.

3. Container according to Claim 1 or 2, **characterised in that** the plastics material has an acetaldehyde content of at least 10 ppm.

4. Container according to one of Claims 1 to 3, **characterised in that** the plastics material contains components of a catalyst.

5. Container according to one of Claims 1 to 4, **characterised in that** the surface coating is applied as at least one layer consisting of a silicon oxide of the general formula SiOx.

6. Container according to one of Claims 1 to 5, **characterised in that** a shaping corresponding to that of a bottle is carried out.

7. Container according to one of Claims 1 to 6, **characterised in that** the plastics material is formed at least partially as PET.

8. Container according to one of Claims 1 to 7, **characterised in that** the surface coating is applied onto the surface by using an adhesion promoter.

9. Device for producing preforms (41) for producing a container according to Claim 1 - 8 from a thermoplastics material, which has an injection-moulding device (81) with cavities (88) for the preforms (41), the injection-moulding device (81) being coupled to a reactor (133) for producing the thermoplastics material, and being coupled via a transport path for the preforms (41) to a blowing device (136) for producing the containers (42), and in that the blowing device (136) is coupled to a plasma module (1) for producing the barrier layer (137) on the container (42).

10. Device according to Claim 9, **characterised in that** at least one temporary storage tank for molten thermoplastics material is arranged between the reactor and the injection-moulding device.

11. Device according to Claim 10, **characterised in that** the filling and emptying of the temporary storage tank is controlled by a reciprocating motion of a piston.

12. Device according to one of Claims 9 to 11, **characterised in that** the reactor is configured as a device for producing PET.

13. Device according to one of Claims 9 to 12, **characterised in that** the reactor has a mixing device for supplying a scavenger.

14. Device according to one of Claims 9 to 13, **characterised in that** at least two injection-moulding devices are connected to the reactor.

15. Device according to Claim 14, **characterised in that** injection-moulding devices which are different from one another are connected to the reactor.

16. Device according to one of Claims 9 to 15, **characterised in that** a mixing device for admixing plasticised recycled material is connected to a coupling between the reactor and the injection-moulding device.

17. Method for producing containers (42) according to Claim 1 - 8 from a thermoplastics material, in which the plastics material is produced in a reactor (133) and is subsequently shaped by an injection-moulding device (81) to form preforms (41) and in which the preforms (41) are formed into the containers (42) by blow moulding and are subsequently at least partially provided in the region of their internal surface with a barrier layer (137) produced by plasma action, the reactor (133) being directly connected to the injection-moulding device (81) and the plastics material produced by the reactor (133) being conveyed as melt from the reactor (133) to the injection-moulding device (81).

18. Method according to Claim 17, **characterised in that** a plurality of injection-moulding devices are supplied by a common reactor.

19. Method according to Claim 17 or 18, **characterised in that** a polymer is produced by the reactor.

20. Method according to one of Claims 17 to 19, **characterised in that** PET is produced by the reactor.

21. Method according to one of Claims 17 to 20, **characterised in that** at least one portion of the plastics melt produced by the reactor is temporarily stored before being processed by injection-moulding.

22. Method according to one of Claims 17 to 21, **characterised in that** recycled material is admixed to the melt before being injected into cavities of the injection-moulding device.

23. Method according to one of Claims 17 to 22, **characterised in that** at least one scavenger is admixed with the material.

## Revendications

1. Récipient, qui est rempli avec une boisson et qui possède une paroi en matière synthétique, thermoplastique, la matière synthétique contenant, au moins par sections, au moins un composant pouvant être libéré dans la boisson, dont une partie est contenue dans la matière synthétique thermoplastique, laquelle partie est supérieure à une partie, qui est contenue dans une matière synthétique standard, prévue pour le conditionnement de la boisson, la paroi étant réalisée avec une matière monocouche, et étant, dans la région de sa surface orientée vers l'intérieur, pourvue, au moins par sections, d'un revêtement de surface, appliqué selon le procédé au plasma, de sorte que le taux de libération du composant en provenance de la matière synthétique, thermoplastique et traversant le revêtement de surface, est tout au plus égal au taux de libération atteint lors de l'utilisation d'une matière synthétique, thermoplastique avec une part de composant libérable située dans la plage de taux de libération d'une matière standard non revêtue, ainsi que réalisé sans utilisation d'un revêtement intérieur.

2. Récipient selon la revendication 1, **caractérisé en ce que** la matière synthétique thermoplastique est formée, au moins partiellement, par une matière recyclable.

3. Récipient selon revendication 1 ou 2, **caractérisé en ce que** la matière synthétique présente une teneur en acétaldéhyde d'au moins 10 ppm.

4. Récipient selon l'une des revendications 1 à 3, **caractérisé en ce que** la matière synthétique contient des parts d'un catalyseur.

5. Récipient selon l'une des revendications 1 à 4, **caractérisé en ce que** le revêtement de la surface est appliqué sous la forme d'au moins une couche d'oxyde de silice de la formule générale SiOx.

6. Récipient selon l'une des revendications 1 à 5, **caractérisé en ce que** la forme correspond à celle d'une bouteille.

7. Récipient selon l'une des revendications 1 à 6, **caractérisé en ce que** la matière synthétique est réalisée au moins partiellement en PET.

8. Récipient selon l'une des revendications 1 à 7, **caractérisé en ce que** le revêtement de la surface est appliqué sur la surface en utilisant un agent adhésif.

9. Dispositif pour la fabrication de préformes (41), pour la fabrication d'un récipient en matière thermoplastique selon l'une des revendications 1 à 8, qui présente une installation de moulage par injection (81) avec des cavités (88) pour les préformes (41), ladite installation de moulage par injection (81) étant couplée avec un réacteur (133) pour la fabrication de la matière thermoplastique, et étant couplée, par l'intermédiaire d'une voie de transport pour les préformes (41), avec une installation de soufflage (136) pour la fabrication des récipients (42) et ladite installation de soufflage (136) étant couplée avec un module au plasma (1) pour la réalisation de la couche barrière (137) sur le récipient (42)

10. Dispositif selon la revendication 9, **caractérisé en ce que**, entre le réacteur et le dispositif de moulage par injection, est disposé au moins un entrepôt pour la matière thermoplastique fondue.

11. Dispositif selon la revendication 10, **caractérisé en ce qu'**un remplissage et une vidange de l'entrepôt sont effectuées, commandées par la course d'un piston.

12. Dispositif selon l'une des revendications 9 à 11, **caractérisé en ce que** le réacteur est conçu en tant que système de fabrication de PET.

13. Dispositif selon l'une des revendications 9 à 12, **caractérisé en ce que** le réacteur présente un dispositif mélangeur pour l'adduction d'une résine absorbante.

14. Dispositif selon l'une des revendications 9 à 13, **caractérisé en ce que** deux systèmes de moulage par injection au moins sont raccordés au réacteur.

15. Dispositif selon la revendication 14, **caractérisé en ce que** des systèmes de moulage par injection différant les uns des autres sont raccordés au réacteur.

16. Dispositif selon l'une des revendications 9 à 15, **caractérisé en ce qu'**une installation de mélange pour l'adduction de matière de recyclage plastifiée est raccordée à un couplage entre le réacteur et l'installation de moulage par injection.

17. Procédé pour la fabrication de récipients (42) selon les revendications 1 à 8 en matière synthétique thermoplastique, dans lequel la matière synthétique est fabriquée dans un réacteur (133) et façonnée ensuite en préformes (43) dans une installation de moulage par injection (81), ainsi que dans lequel les préformes (41) sont transformées en récipients (42) par mise en oeuvre de la technique de soufflage, et sont pourvues ensuite, au moins par sections, dans la région de leur surface intérieure, d'une couche barrière (137), fabriquée au plasma, le réacteur (133) étant raccordé directement à l'installation de moulage par injection (81), et la matière synthétique, fabriquée par le réacteur (133), étant conduite, sous la forme de fonte, du réacteur (133) à l'installation de moulage par injection (81).

18. Procédé selon la revendication 17, **caractérisé en ce que** plusieurs installations de moulage par injection sont alimentées par un réacteur commun.

19. Procédé selon revendication 17 ou 18, **caractérisé en ce qu'**un polymère est fabriqué par le réacteur.

20. Procédé selon l'une des revendications 17 à 19, **caractérisé en ce que** du PET est fabriqué par le réacteur.

21. Procédé selon l'une des revendications 17 à 20, **caractérisé en ce qu'**au moins une partie de la fonte de matière synthétique, produite par le réacteur, est entreposée avant d'être traitée selon la technique du moulage par injection.

22. Procédé selon l'une des revendications 17 à 21, **caractérisé en ce qu'**une matière de recyclage est ajoutée à la fonte avant que celle-ci soit injectée dans des cavités de l'installation de moulage par injection.

23. Procédé selon l'une des revendications 17 à 22, **caractérisé en ce qu'**au moins une résine absorbante est ajoutée à la matière.
